# EUROPÄISCHE PATENTSCHRIFT

(11) **EP 0 513 886 B1**
(45) Veröffentlichungstag und Bekanntmachung des Hinweises auf die Patenterteilung: **26.07.1995**
(21) Anmeldenummer: 92201122.6
(22) Anmeldetag: 21.04.1992
(51) Int. Cl.: G11B 23/023

(54) **Behälter für eine Kassette**
Holder for a cassette
Réceptacle pour cassette

(30) Priorität: 29.04.1991 AT 890/91
(43) Veröffentlichungstag der Anmeldung: 19.11.1992
(73) Patentinhaber: Philips Electronics N.V., 5621 BA Eindhoven (NL)
(72) Erfinder: Stöger, Anton, NL-5656 AA Eindhoven (NL)
(74) Vertreter: Cuppens, Hubertus Martinus Maria

(56) Entgegenhaltungen:
- EP-A- 0 404 591
- FR-A- 2 508 222
- FR-A- 2 632 759
- US-A- 4 253 567
- US-A- 4 287 989
- US-A- 4 987 999

## Beschreibung

Die Erfindung betrifft einen quaderförmigen Behälter, der aus einem formstabilen Kunststoff besteht und der zwei Hauptwände und drei die beiden Hauptwände verbindende Seitenwände aufweist und der an einer vierten Seite offen ausgebildet ist und in den durch die offene Seite hindurch eine quaderförmige Kassette mit einem darin enthaltenen Aufzeichnungsträger zum geschützten Aufnehmen der Kassette einführbar ist und der im Bereich mindestens einer an die offene Seite angrenzenden Seitenwand einen im Bereich dieser Seitenwand mit dem Behälter verbundenen, zum klemmenden Festhalten einer in den Behälter eingeführten Kassette vorgesehenen Klemmteil aufweist, der von äußeren Konturen begrenzt ist und der einen im Bereich der Innenseite der Seitenwand in das Behälterinnere vorspringenden Abschnitt aufweist.

Ein Behälter gemäß der im vorstehenden ersten Absatz angeführten Gattung ist beispielsweise aus der FR 2 508 222 bekannt. Bei dem bekannten Behälter ist ein Klemmteil in einer Ausnehmung in einer Seitenwand des Behälters vorgesehen, wobei aber der Klemmteil die Seitenwand nicht gänzlich durchsetzt. Weiters ist aus der FR 2 508 222 nicht zu entnehmen, wie der Klemmteil in die Ausnehmung eingebracht wird und aus welchem Material der Klemmteil besteht und wie der Klemmteil im Detail ausgebildet ist.

Die Erfindung hat sich zur Aufgabe gestellt, einen Behälter gemäß der im vorstehenden ersten Absatz angeführten Gattung zu verbessern, und einen Behälter zu schaffen, bei dem ein einfaches Anbringen eines Klemmteiles gewährleistet ist und bei dem ein schonendes zusammenwirken des Klemmteiles mit einer Kassette sichergestellt ist. Zur Lösung dieser Aufgabe ist erfindungsgemäß vorgesehen, daß der Klemmteil die Seitenwand von ihrer Innenseite bis zu ihrer Außenseite durchsetzt und daß der Klemmteil aus einem elastischen Material besteht und von einer in den Behälter eingeführten Kassette über den in das Behälterinnere vorspringenden Abschnitt teilweise elastisch verformbar ist und daß der Klemmteil mit mindestens einer innerhalb seiner äußeren Konturen liegenden Materialaussparung versehen ist, die zumindest großteils im Bereich des in das Behälterinnere vorspringenden Abschnittes des Klemmteiles vorgesehen ist und in die bei in den Behälter eingesetzter Kassette ein Teil des die Materialaussparung umgebenden Materials des Klemmteiles hineindrückbar ist. Auf diese Weise ist erreicht, daß der Klemmteil einfach von der Außenseite her durch die Seitenwand des Behälters hindurchgeführt werden kann, um den Klemmteil mit der Seitenwand zu verbinden. Aufgrund des elastischen Materials des Klemmteiles ist ein besonderes schonendes Zusammenwirken des Klemmteiles mit einer Kassette erreicht. Weiters ist auf diese Weise erreicht, daß die durch eine in den Behälter eingesetzte Kassette bewirkten elastischen Verformungen des Klemmteiles praktisch zur Gänze nur im Bereich des in das Behälterinnere vorspringenden Abschnittes des Klemmteiles stattfinden und keine elastischen Verformungen in dem von außen sichtbaren Bereich des Klemmteiles erfolgen, so daß der Klemmteil keine nach außen gewölbte Ausbuchtung bildet, sondern auch bei einer in den Behälter eingesetzten Kassette mit seinem von außen sichtbaren Bereich mit der von ihm durchsetzten Seitenwand stets fluchtet. Durch das Vorsehen von mindestens einer Materialaussparung, die im wesentlichen im Bereich des in das Behälterinnere vorspringenden Abschnittes des Klemmteiles vorgesehen ist, ist vorteilhafterweise weiters erreicht, daß der Klemmteil in seinem unmittelbar mit der Seitenwand verbundenen Bereich nur relativ geringen Verformungen unterworfen wird und damit in diesem Bereich nur relativ geringen mechanischen Belastungen ausgesetzt ist, was hinsichtlich einer stets gleichbleibend guten Verbindung des Klemmteiles mit dem Behälter vorteilhaft ist.

Es kann erwähnt werden, daß in der EP 0 493 845 A2, die nach dem Prioritätstag der vorliegenden Anmeldung veröffertlicht ist, ein Behälter zum Aufnehmen einer Kassette beschrieben ist, bei dem vorgesehen ist, einen eine Seitenwand des Behälters durchsetzenden Klemmteil aus Silikongummi und in der Art auszubilden, daß der gesamte Klemmteil innerhalb seiner äußeren Konturen mit Material, also in diesem Fall mit Silikongummi, gefüllt ist. Ein solcher Klemmteil ist zwar auch einfach mit der Seitenwand des Behälters durch einfaches Hindurchstecken verbindbar und ein solcher Klemmteil gewährleistet auch ein schonendes Zusammenwirken mit einer Kassette, aber bei einem solchen Klemmteil treten bei einer in den Behälter eingeführten, mit dem Klemmteil zusammenwirkenden Kassette aufgrund der Weichheit des aus Gummi bestehenden Klemmteiles und vor allem aufgrund der Tatsache, daß der gesamte Klemmteil innerhalb seiner äußeren Konturen mit Silikongummi gefüllt ist, praktisch den gesamten Klemmteil betreffende elastische Verformungen auf, die sich, weil der Klemmteil durch die betreffende Seitenwand hindurchgeführt ist, dahingehend auswirken, daß der Klemmteil - der bei keiner in den Behälter eingeführten Kassette mit seinem von außen sichtbaren Bereich mit der betreffenden Seitenwand fluchtet - eine gegenüber dieser Seitenwand nach außen gewölbte Ausbuchtung, also einen Buckel bildet, was unerwünscht ist, weil durch eine solche gegenüber der von dem Klemmteil durchsetzten Seitenwand vorspringende Ausbuchtung die Gefahr eines unbeabsichtigten Herausreissens des Klemmteiles vergrößert ist, und was auch aus optischen Gründen unerwünscht ist. Durch das Vorsehen von mindestens einer Materialaussparung bei dem Klemmteil eines erfindungsgemäßen Behälters ist dem Auftreten einer solchen vorspringenden Ausbuchtung am Klemmteil vorteilhafterweise vorgebeugt.

Hinsichtlich der konstruktiven Ausbildung des Klemmteiles eines erfindungsgemäßen Behälters gibt es verschiedene Möglichkeiten. Ein solcher Klemmteil kann unterschiedliche Formen aufweisen und die mindestens eine Materialaussparung innerhalb der äußeren Konturen eines solchen Klemmteiles kann beispielsweise zylindrisch ausgebildet sein, wobei die Zylinderachse der Materialaussparung senkrecht zu der vom Klemmteil durchsetzten Seitenwand verläuft. Als sehr vorteilhaft hat sich aber erwiesen, wenn der Klemmteil bezüglich einer Symmetrieachse, die senkrecht zu der von dem Klemmteil durchsetzten Seitenwand verläuft, rotationssymmetrisch ausgebildet ist und die Materialaussparung durch eine der Rotationssymmetrie des Klemmteiles entsprechende, zum Behälterinneren hin sich erweiternde und zum Behälterinneren hin offene Materialaussparung gebildet ist. Eine solche rotationssymmetrische Ausbildung eines solchen Klemmteiles ist vorteilhaft hinsichtlich einer einfachen Montage des Klemmteiles in einem automatisierten Montagevorgang. Eine solche sich erweiternde, offene Materialaussparung eines solchen Klemmteiles ist vorteilhaft hinsichtlich einer einfachen Herstellung des Klemmteiles, insbesondere dann, wenn der Klemmteil als gespritzter Kunststoffteil hergestellt wird, weil in diesem Fall die offene sich erweiternde Materialaussparung unproblematisch entformbar ist.

Bei einem solchen rotationssymmetrischen Klemmteil kann die ebenfalls rotationssymmetrische Materialaussparung beispielsweise eine sich stetig erweiternde Kuppelform aufweisen. Als besonders vorteilhaft hat sich erwiesen, wenn die Materialaussparung kegelförmig ausgebildet ist. Eine solche kegelförmige Materialaussparung ist hinsichtlich einer besonders einfachen und preisgünstigen Herstellung vorteilhaft.

Bei einem solchen rotationssymmetrischen Klemmteil hat sich als besonders vorteilhaft erwiesen, wenn der in das Behälterinnere vorspringende Abschnitt des Klemmteiles eine kegelstumpfförmige äußere Kontur aufweist. Durch eine solche kegelstumpfförmige Ausbildung der äußeren Kontur des in das Behälterinnere vorspringenden Abschnittes des Klemmteiles ist erreicht, daß derselbe leicht von außen her in eine Öffnung in der betreffenden Seitenwand des Behälters einführbar und durch die Öffnung durchsteckbar ist, was ebenfalls hinsichtlich eines automatisierten Montagevorganges vorteilhaft ist.

Als vorteilhaft hat sich auch erwiesen, wenn der Klemmteil bezüglich einer Symmetrieebene, die senkrecht zu der von dem Klemmteil durchsetzten Seitenwand verläuft, im wesentlichen spiegelsymmetrisch ausgebildet ist und die mindestens eine Materialaussparung bezüglich der Symmetrieebene des Klemmteiles spiegelsymmetrisch angeordnet ist. Ein solcher Klemmteil ist vorteilhafterweise in einem einfachen Schneidvorgang aus einem handelsüblichen, vorzugsweise aus Silikongummi bestehenden Schlauch herstellbar.

Bei einem solchen spiegelsymmetrischen Klemmteil hat sich als sehr vorteilhaft erwiesen, wenn die mindestens eine Materialaussparung durch einen zylindrischen Durchgang gebildet ist, der durch den Klemmteil in einer parallel zu der von ihm durchsetzten Seitenwand verlaufenden Richtung hindurchführt und der an seinen beiden axialen Endbereichen offen und in seinem radialen Endbereich allseitig von dem Material des Klemmteiles umgeben ist. Hiedurch weist der Klemmteil in seinem mit einer in den Behälter eingeführten Kassette zusammenwirkenden Bereich eine geschlossene Oberfläche auf, was hinsichtlich eines für beide Teile besonders schonenden Zusammenwirkens des Klemmteiles mit einer Kassette vorteilhaft ist.

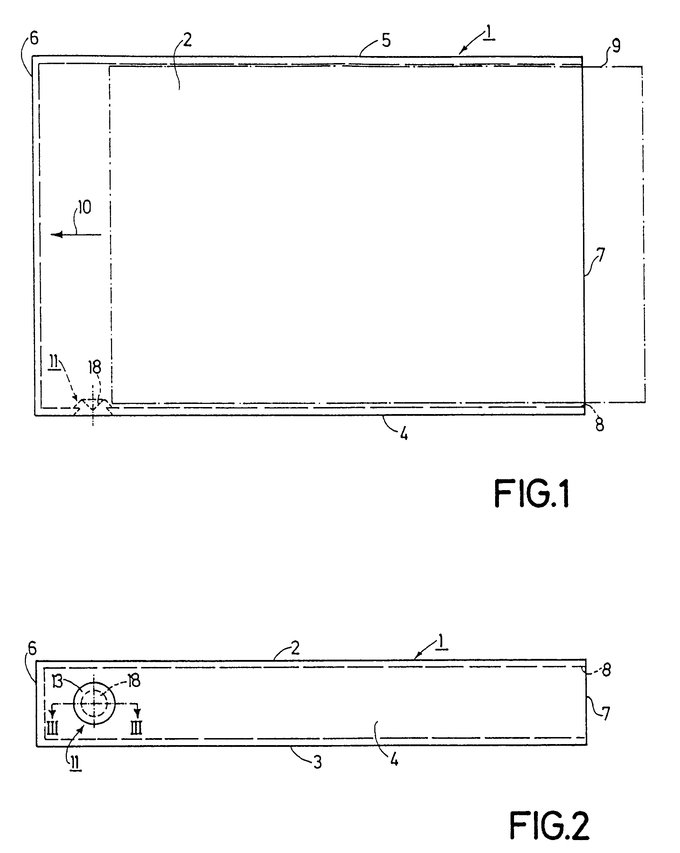

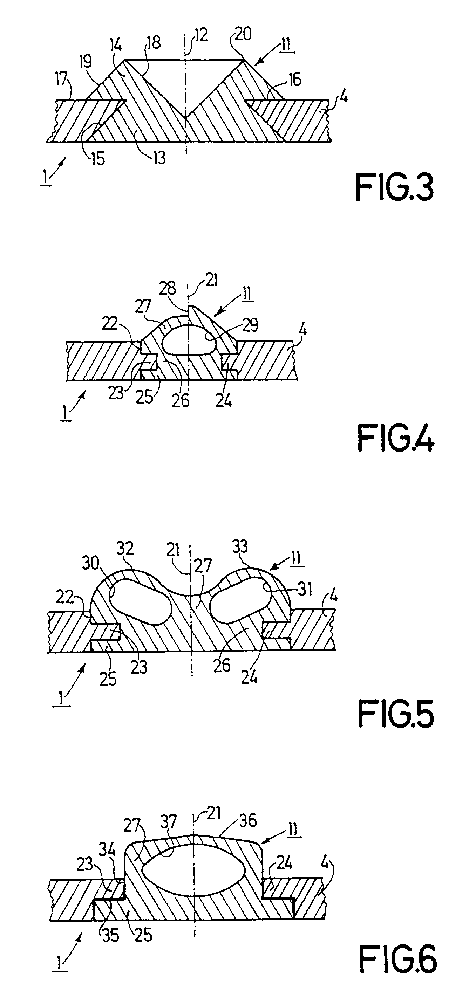

Die Erfindung wird im folgenden anhand von vier Ausführungsbeispielen näher beschrieben, auf die die Erfindung jedoch nicht beschränkt sein soll. Die Fig.1 zeigt in Draufsicht in einem gegenüber der natürlichen Größe vergrößerten Maßstab auf etwas schematisierte Weise einen Behälter gemäß einem ersten Ausführungsbeispiel, der zum Aufnehmen einer Kassette mit einem darin untergebrachten Magnetband vorgesehen ist und der einen eine Seitenwand durchsetzenden rotationssymmetrischen Klemmteil aufweist, der im Bereich seines in das Behälterinnere vorspringenden Abschnittes eine kegelförmige Materialaussparung aufweist. Die Fig.2 zeigt in einer Seitenansicht auf die von dem Klemmteil durchsetzte Seitenwand den Behälter gemäß Fig.1. Die Fig.3 zeigt in einem Schnitt gemäß der Linie III-III in Fig.2 in einem gegenüber Fig.2 größeren Maßstab ein Detail des Behälters gemäß den Figuren 1 und 2, das den rotationssymmetrischen Klemmteil mitumfaßt. Die Fig.4 zeigt analog wie die Fig.3 ein Detail eines Behälters gemäß einem zweiten Ausführungsbeispiel, das einen spiegelsymmetrischen Klemmteil mitumfaßt, der zum Zusammenwirken mit einer Kassette eine abgestuft ausgebildete Klemmzone aufweist. Die Fig.5 zeigt analog wie die Figuren 3 und 4 ein Detail eines Behälters gemäß einem dritten Ausführungsbeispiel, das einen spiegelsymmetrischen Klemmteil mitumfaßt, der mit zwei zueinander spiegelsymmetrisch angeordneten Materialaussparungen versehen ist. Die Fig.6 zeigt analog wie die Figuren 3, 4 und 5 ein Detail eines Behälters gemäß einem vierten Ausführungsbeispiel, das einen spiegelsymmetrischen Klemmteil mitumfaßt, der zum Zusammenwirken mit einer Kassette eine relativ großflächige Klemmzone aufweist.

Die Figuren 1 und 2 zeigen einen quaderförmigen Behälter 1 gemäß einem ersten Ausführungsbeispiel der Erfindung. Der Behälter 1 besteht aus einem formstabilen Kunststoff, der beispielsweise durch Polycarbonat oder Acrylnitrilbutadienstyrol gebildet ist. Beide dieser erwähnten Kunststoffe weisen eine hohe Formbeständigkeit und eine hohe Temperaturbeständigkeit auf, was für einen derartigen Behälter wichtig ist, da ein solcher Behälter oftmals hohen Temperaturbelastungen und großen Temperaturschwankungen ausgesetzt ist. Der Behälter 1 weist zwei Hauptwände, nämlich eine Deckenwand 2 und eine Bodenwand 3 auf. Weiters weist der Behälter 1 drei die beiden Hauptwände 2 und 3 verbindende Seitenwände auf, und zwar eine linke Seitenwand 4, eine rechte Seitenwand 5 und eine hintere Seitenwand 6. An einer vierten Seite 7 ist der Behälter 1 offen ausgebildet, wobei er an dieser Seite 7 eine Öffnung 8 aufweist. In den Behälter 1 ist durch die Öffnung 8 in der offenen Seite 7 hindurch eine nur in Fig.1 schematisch mit einer strichpunktierten Linie dargestellte quaderförmige Kassette 9 mit einem darin enthaltenen Aufzeichnungsträger, in diesem Fall mit einem nicht dargestellten Magnetband, zum geschützten Aufnehmen der Kassette 9 einführbar. Es sei erwähnt, daß der Behälter 1 mit einer nicht dargestellten Zwischenwand versehen ist, die den Kassettenaufnahmeraum von einem weiteren an die Deckenwand 2 angrenzenden Aufnahmeraum zum Aufnehmen eines Etikettes trennt, und daß in der Deckenwand 2 ein nicht dargestelltes Fenster vorgesehen ist, durch das hindurch ein in den Behälter eingeschobenes Etikett sichtbar ist. Die Zwischenwand und das Fenster sind in den Figuren 1 und 2 nicht dargestellt, da sie in vorliegendem Zusammenhang nicht wesentlich sind.

Der Behälter 1 weist im Bereich der an die offene Seite 7 angrenzenden linken Seitenwand 4 einen im Bereich dieser Seitenwand 4 mit dem Behälter 1 verbundenen, diese Seitenwand 4 durchsetzenden, zum klemmenden Festhalten einer in den Behälter 1 in Richtung des Pfeiles 10 eingeführten Kassette 9 vorgesehenen Klemmteil 11 auf. Der Klemmteil 11 besteht aus einem elastischen Material, das bei dem vorliegenden Behälter gemäß den Figuren 1 bis 3 durch Silikongummi gebildet ist. Der Klemmteil 11 könnte aber auch aus einem elastischen Kunststoff bestehen, wobei beispielsweise der im Handel unter dem Warenzeichen "Hytrel", das für die Firma Du Pont eingetragen ist, erhältliche Kunststoff verwendet werden kann.

Der Klemmteil 11 ist von äußeren Konturen begrenzt und ist im vorliegenden Fall bezüglich einer Symmetrieachse 12, die senkrecht zu der von dem Klemmteil 11 durchsetzten Seitenwand 4 verläuft, rotationssymmetrisch ausgebildet. Der Klemmteil 11 weist einen von außen sichtbaren Abschnitt 13 auf, der kegelstumpfförmig ausgebildet ist. Weiters weist der Klemmteil 11 einen gegenüber der von ihm durchsetzten Seitenwand 4 in das Behälterinnere vorspringenden weiteren Abschnitt 14 auf. Dieser in das Behälterinnere vorspringende Abschnitt 14 des Klemmteiles 11 weist eine kegelstumpfförmige äußere Kontur auf. Der Klemmteil 11 ist mit seinem von außen sichtbaren Abschnitt 13 in eine Öffnung 15 in der Seitenwand 4 des Behälters 1 eingesetzt, die eine der kegelstumpfförmigen Ausbildung dieses Abschnittes 13 entsprechende Form aufweist und wobei sich der Klemmteil 11 mit einer ringförmigen Begrenzungsfläche 16 des ebenfalls kegelstumpfförmigen weiteren Abschnittes 14 an der Innenfläche 17 der Seitenwand 4 abstützt. Durch die zweifach kegelstumpfförmige Ausbildung des Klemmteiles 11 ist vorteilhafterweise erreicht, daß derselbe einfach von außen her in die Öffnung 15 einführbar und durch die Öffnung 15 hindurchdrückbar ist, was hinsichtlich eines automatisierten Montagevorganges besonders vorteilhaft ist. Durch die zweifache kegelstumpfförmige Ausbildung des Klemmteiles 11 ist ferner erreicht, daß derselbe besonders sicher an der Seitenwand 4 festgehalten ist, wobei das Festhalten in Form einer Schnappverbindung erfolgt, bei der keine zusätzliche Klebeverbindung oder Ultraschallschweißverbindung erforderlich ist.

Der Klemmteil 11 ist von einer in den Behälter 1 eingeführten Kassette über den in das Behälterinnere vorspringenden Abschnitt 14 teilweise elastisch verformbar. Beim Einführen einer Kassette 9 in den Behälter 1 in Richtung des Pfeiles 10 wird der Klemmteil 11 teilweise elastisch deformiert, wobei eine Klemmwirkung erzeugt wird, mit der eine vollständig in den Behälter eingeführte Kassette klemmend festgehalten wird.

Der Klemmteil 11 ist vorteilhafterweise im Bereich seines in das Behälterinnere vorspringenden Abschnittes 14 mit einer klemmteilinnenseitigen, also innerhalb seiner äußeren Konturen liegenden Materialaussparung 18 versehen, in die bei in den Behälter 1 eingesetzter Kassette 9 ein Teil des die Materialaussparung 18 umgebenden Materials des Klemmteiles 11 hineindrückbar ist. Im vorliegenden Fall ist die Materialaussparung 18 durch eine der Rotationssymmetrie des Klemmteiles 11 entsprechende, zum Behälterinneren hin sich erweiternde und zum Behälterinneren hin offene Materialaussparung gebildet, die hiebei kegelförmig ausgebildet ist. Eine solche kegelförmige Materialaussparung 18 ist hinsichtlich der Herstellung des Klemmteiles 11 vorteilhaft, da eine solche kegelförmige Materialaussparung problemlos entformbar und besonders einfach und preiswert herstellbar ist. Bei der Materialaussparung 18 handelt es sich um eine klemmteilinnenseitige Materialaussparung, worunter zu verstehen ist, daß die Materialaussparung innerhalb der äußeren Konturen des Klemmteiles gelegen ist.

Beim vorliegenden Klemmteil 11 ist im Übergangsbereich zwischen der klemmteilinnenseitigen Materialaussparung 18 und der kegelstumpfförmigen äußeren Kontur 19 des Klemmteiles 11, also der klemmteilaußenseitigen kegelstumpfförmig verlaufenden Mantelfläche 19 des Klemmteiles 11 eine relativ scharfkantige kreisförmige Klemmzone 20 gebildet, die sich zum klemmenden Festhalten einer Kassette als sehr vorteilhaft erwiesen hat. Dies insbesondere dann, wenn die Kassette im Bereich der der Seitenwand 4 gegenüberliegenden kassettenseitigen Seitenwand eine Abstufung aufweist, die von der relativ scharfkantigen Klemmzone 20 hintergreifbar ist.

Durch das Vorsehen einer solchen klemmteilinnenseitigen, also innerhalb der äußeren Konturen des Klemmteiles liegenden Materialaussparung, in die bei in den Behälter eingesetzter Kassette ein Teil des die Materialaussparung umgebenden Materials des Klemmteiles hineindrückbar ist, ist vorteilhafterweise erreicht, daß die durch eine in den Behälter eingesetzte Kassette bewirkten elastischen Verformungen des Klemmteiles praktisch zur Gänze nur im Bereich des in das Behälterinnere vorspringenden Abschnittes des Klemmteiles stattfinden. Auf diese Weise ist erreicht, daß keine elastischen Verformungen in dem von außen sichtbaren Abschnitt des Klemmteiles erfolgen, so daß der Klemmteil keine gegenüber der von ihm durchsetzten Seitenwand nach außen gewölbte Ausbuchtung bildet, sondern auch bei einer in den Behälter eingesetzten Kassette mit seinem von außen sichtbaren Bereich mit der von ihm durchsetzten Seitenwand stets plan fluchtet. Dies ist im Hinblick auf eine einwandfreie Stapelung bzw. Lagerung einer Vielzahl von solchen Behältern in einer vorgegebenen Anordnung und im Hinblick auf ein stets sicheres Festhalten des Klemmteiles an dem Behälter sowie im Hinblick auf einen einwandfreien optischen Eindruck des Behälters von Vorteil.

Bei dem in der Figur 4 ausschnittsweise dargestellten Behälter 1 ist mit dessen Seitenwand 4 ein Klemmteil 11 verbunden, der die Seitenwand 4 ebenfalls durchsetzt und der bezüglich einer Symmetrieebene 21, die senkrecht zu der von dem Klemmteil 11 durchsetzten Seitenwand 4 verläuft, im wesentlichen spiegelsymmetrisch ausgebildet ist. Der Klemmteil 11 ist durch eine im Querschnitt rechteckige Öffnung 22 hindurchgeführt, in die zwei von der Seitenwand 4 abstehende Leisten 23 und 24 hineinragen. Der Klemmteil 11 weist einen ersten im Querschnitt rechteckigen Abschnitt 25, einen zweiten ebenfalls im Querschnitt rechteckigen, zwischen den beiden Leisten 23 und 24 liegenden Abschnitt 26 und einen dritten gegenüber der von dem Klemmteil 11 durchsetzten Seitenwand 4 in das Behälterinnere vorspringenden, im wesentlichen dachförmig ausgebildeten Abschnitt 27 auf. Der dachförmig ausgebildete Abschnitt 27 ist mit einer Abstufung 28 versehen, die im wesentlichen die Klemmzone dieses Klemmteiles bildet und die speziell zum Hintergreifen einer im Bereich der entsprechenden Seitenwand einer in den Behälter eingeführten Kassette vorgesehenen korrespondierenden Abstufung vorgesehen ist. Mit Hilfe der beiden Leisten 23 und 24 und der hiezu korrespondierenden Form des Klemmteiles 11 ist eine Schnappverbindung gebildet, mit der der Klemmteil 11 an der Seitenwand 4 des Behälters 1 festgehalten ist.

Der Klemmteil 11 des Behälters 1 gemäß Figur 4 weist eine Materialaussparung 29 auf, die bezüglich der Symmetrieebene 21 des Klemmteiles 11 spiegelsymmetrisch angeordnet ist. Die Materialaussparung 29 ist hiebei durch einen zylindrischen Durchgang gebildet, der durch den Klemmteil 11 in einer parallel zu der von ihm durchsetzten Seitenwand 4 verlaufenden Richtung hindurchführt und der an seinen beiden axialen Endbereichen offen und in seinem radialen Endbereich allseitig von dem Material des Klemmteiles umgeben ist. Auch in diesem Fall finden die elastischen Verformungen des Klemmteiles 11 beim Einführen einer Kassette in den Behälter im wesentlichen nur im Bereich des in das Behälterinnere vorspringenden Abschnittes statt, wobei das durch die Kassette verdrängte Material in die Materialaussparung 29 hineingedrückt wird, so daß der erste Abschnitt 25 und der zweite Abschnitt 26 sowie die an die Leisten 23 und 24 angrenzenden Bereiche des dritten Abschnittes 27 des Klemmteiles 11 praktisch überhaupt keine Deformationen erfahren, was im Hinblick auf ein sicheres Festhalten des Klemmteiles 11 in der Öffnung 22 vorteilhaft ist. Auch in diesem Fall ist somit erreicht, daß der Klemmteil 11 mit seinem ersten Abschnitt 25 auch bei in den Behälter 1 eingesetzter Kassette stets mit der Seitenwand 4 plan fluchtend verbleibt.

Bei dem in der Figur 5 ausschnittsweise dargestellten Behälter 1 weist der Klemmteil 11 analog wie bei dem Behälter gemäß Figur 4 eine bezüglich einer Symmetrieebene 21 spiegelsymmetrische Ausbildung auf. Die Befestigung des Klemmteiles 11 beim Behälter gemäß Figur 5 erfolgt praktisch in derselben Weise wie die Befestigung des Klemmteiles 11 bei dem Behälter gemäß Figur 4. Beim Klemmteil 11 des Behälters gemäß Figur 5 sind zwei Materialaussparungen 30 und 31 vorgesehen, die bezüglich der Symmetrieebene 21 des Klemmteiles 11 spiegelsymmetrisch angeordnet sind. Die beiden Materialaussparungen 30 und 31 sind analog wie beim Klemmteil des Behälters gemäß Figur 4 je durch einen zylindrischen Durchgang gebildet, der durch den Klemmteil 11 in einer parallel zu der von ihm durchsetzten Seitenwand 4 verlaufenden Richtung hindurchführt und der an seinen beiden axialen Endbereichen offen und in seinem radialen Endbereich allseitig von dem Material des Klemmteiles 11 umgeben ist. Der Klemmteil 11 des Behälters 1 gemäß Figur 5 weist zwei mit Abstand voneinander liegende Klemmzonen 32 und 33 auf. Auch bei diesem Klemmteil treten bei in den Behälter eingesetzter Kassette praktisch keine von außen sichtbaren Deformationen auf.

Bei dem in der Figur 6 auszugsweise dargestellten Behälter 1 ist ebenfalls ein Klemmteil 11 vorgesehen, der bezüglich einer Symmetrieebene 21 spiegelsymmetrisch ausgebildet ist. Der Klemmteil ist in diesem Fall durch eine einfach abgestufte Öffnung 34 hindurchgeführt, in der der Klemmteil 11 mittels einer durch eine verstärkte Linie angedeuteten Kleberschicht 35 befestigt ist. Der Klemmteil könnte auch mittels einer Ultraschallschweißverbindung mit der Seitenwand 4 des Behälters 1 gemäß Figur 6 verbunden sein. Im Vergleich zu dem Klemmteil 11 des Behälters 1 gemäß Figur 5, der zwei mit Abstand voneinander liegende Klemmzonen 32 und 33 aufweist, weist der Klemmteil 11 des Behälters 1 gemäß Figur 6 nur eine Klemmzone 36 auf, die vorteilhafterweise aber relativ großflächig ausgebildet ist. Der Klemmteil 11 des Behälters 1 gemäß Figur 6 ist mit nur einer als zylindrischer Durchgang ausgebildeter Materialaussparung 37 versehen, die in ihrer Querschnittsdimension dementsprechend größer dimensioniert ist als jeder der beiden zylindrischen Durchgänge des Klemmteiles des Behälters gemäß Figur 5. Auch bei dem Klemmteil des Behälters gemäß Figur 6 treten bei in den Behälter eingesetzter Kassette keine von außen sichtbaren Deformationen auf.

Wie aus Vorstehendem ersichtlich ist, sind eine Reihe von Ausbildungsvarianten möglich. Beispielsweise kann anstelle einer kegelförmigen, zum Behälterinneren hin offenen Materialaussparung auch eine kuppelförmige, zum Behälterinneren hin offene Materialaussparung in einem rotationssymmetrisch ausgebildeten Klemmteil vorgesehen sein. Auch ist es möglich, in einem spiegelsymmetrisch ausgebildeten Klemmteil mehr als zwei Materialaussparungen vorzusehen, die beispielsweise durch relativ enge Kanäle gebildet sein können. Ebenso kann die zum Zusammenwirken mit einer in einen Behälter eingeführten Kassette vorgesehene Klemmzone eines Klemmteiles beispielsweise einen sägezahnförmigen Verlauf aufweisen.

## Patentansprüche

1. Quaderförmiger Behälter (1), der aus einem formstabilen Kunststoff besteht und der zwei Hauptwände (2, 3) und drei die beiden Hauptwände (2, 3) verbindende Seitenwände (4, 5, 6) aufweist und der an einer vierten Seite (7) offen ausgebildet ist und in den durch die offene Seite (7) hindurch eine quaderförmige Kassette (9) mit einem darin enthaltenen Aufzeichnungsträger zum geschützten Aufnehmen der Kassette (9) einführbar ist und der im Bereich mindestens einer an die offene Seite (7) angrenzenden Seitenwand (4) einen im Bereich dieser Seitenwand (4) mit dem Behälter (1) verbundenen, zum klemmenden Festhalten einer in den Behälter (1) eingeführten Kassette (9) vorgesehenen Klemmteil (11) aufweist, der von äußeren Konturen begrenzt ist und der einen im Bereich der Innenseite der Seitenwand (4) in das Behälterinnere vorspringenden Abschnitt (14; 27) aufweist, dadurch gekennzeichnet, daß der Klemmteil (11) die Seitenwand (4) von ihrer Innenseite bis zu ihrer Außenseite durchsetzt und daß der Klemmteil (11) aus einem elastischen Material besteht und von einer in den Behälter (1) eingeführten Kassette (3) über den in das Behälterinnere vorspringenden Abschnitt (14; 27) teilweise elastisch verformbar ist und daß der Klemmteil (11) mit mindestens einer innerhalb seiner äußeren Konturen liegenden Materialaussparung (18; 29; 30, 31; 37) versehen ist, die zumindest großteils im Bereich des in das Behälterinnere vorspringenden Abschnittes (14; 27) des Klemmteiles (11) vorgesehen ist und in die bei in den Behälter (1) eingesetzter Kassette (9) ein Teil des die Materialaussparung (18; 29; 30, 31; 37) umgebenden Materials des Klemmteiles (11) hineindrückbar ist.

2. Behälter nach Anspruch 1, dadurch gekennzeichnet, daß der Klemmteil (11) bezüglich einer Symmetrieachse (12), die senkrecht zu der von dem Klemmteil (11) durchsetzten Seitenwand (4) verläuft, rotationssymmetrisch ausgebildet ist und daß die Materialaussparung (18) durch eine der Rotationssymmetrie des Klemmteiles (11) entsprechende, zum Behälterinneren hin sich erweiternde und zum Behälterinneren hin offene Materialaussparung gebildet ist.

3. Behälter nach Anspruch 2, dadurch gekennzeichnet, daß die Materialaussparung (18) kegelförmig ausgebildet ist.

4. Behälter nach Anspruch 2 oder 3, dadurch gekennzeichnet, daß der in das Behälterinnere vorspringende Abschnitt (14) des Klemmteiles (11) eine kegelstumpfförmige äußere Kontur (19) aufweist.

5. Behälter nach Anspruch 1, dadurch gekennzeichnet, daß der Klemmteil (11) bezüglich einer Symmetrieebene (21), die senkrecht zu der von dem Klemmteil (11) durchsetzten Seitenwand (4) verläuft, im wesentlichen spiegelsymmetrisch ausgebildet ist und daß die mindestens eine Materialaussparung (29; 30, 31; 37) bezüglich der Symmetrieebene (21) des Klemmteiles (11) spiegelsymmetrisch angeordnet ist.

6. Behälter nach Anspruch 5, dadurch gekennzeichnet, daß die mindestens eine Materialaussparung (29; 30, 31; 37) durch einen zylindrischen Durchgang gebildet ist, der durch den Klemmteil (11) in einer parallel zu der von ihm durchsetzten Seitenwand (4) verlaufenden Richtung hindurchführt und der an seinen beiden axialen Endbereichen offen und in seinem radialen Endbereich allseitig von dem Material des Klemmteiles (11) umgeben ist.

## Claims

1. A holder (1) of rectangular shape, which holder is made of a dimensionally stable plastics and comprises two main walls (2, 3) and three side walls (4, 5) interconnecting the two main walls (2, 3) and is open at a fourth side (7), which holder is adapted to receive through the open side (7) a rectangular cassette (9) with a record carrier contained therein for securely holding the cassette (9) and which at the location of at least one side wall (4) adjacent the open side (7) comprises a clamping member (11) for clamping a cassette (9) inserted in the holder (1), which clamping member is connected to the holder (1) at the location of said side wall (4), is bounded by external contours and comprises a part (14; 27) which projects into the holder interior at the location of the inner side of the side wall (4), characterised in that the clamping member (11) traverses the side wall (4) from its inner side to its outer side, and the clamping member (11) is made of an elastic material and can be partly deformed elastically by a cassette (3) inserted in the holder (1) via the part (14; 27) which projects into the holder interior, and the clamping member (11) is provided with at least one cavity (18; 29; 30, 31; 37) within its external contours, which cavity is formed at least largely at the location of the part (14; 27) of the clamping member (11) which projects into the holder interior and, when the holder (1) contains a cassette (9) can take up a part of the material of the clamping member (11) around the cavity (18; 29; 30, 31; 37).

2. A holder as claimed in Claim 1, characterised in that the clamping member (11) is rotationally symmetrical relative to an axis (12) of symmetry perpendicular to the side wall (4) through which the clamping member (11) extends and the cavity (18) is in conformity with the rotational symmetry of the clamping member (11), flares towards the holder interior and is open towards the holder interior.

3. A holder as claimed in Claim 2, characterised in that the cavity (18) is conical.

4. A holder as claimed in Claim 2 or 3, characterised in that the part (14) of the clamping member (11) which projects into the holder interior has a frustoconical external contour (19).

5. A holder as claimed in Claim 1, characterised in that the clamping member (11) is mirror-symmetrical relative to a plane (21) of symmetry which extends perpendicularly to the side wall (4) through which the clamping member (11) projects and the cavity is arranged to be mirror-symmetrical relative to the plane (21) of symmetry of the clamping member (11).

6. A holder as claimed in Claim 5, characterised in that the at least one cavity (29; 30, 31; 37) is formed by a cylindrical passage which traverses the clamping member (11) in a direction parallel to the side wall (4) through which it extends, which is open at its two axial end zones, and which is radially surrounded with the material of the clamping member (11) at all sides.

## Revendications

1. Réceptacle parallélépipédique (1) fabriqué dans un matériau plastique rigide et présentant deux parois principales (2, 3) et trois parois latérales (4, 5, 6) reliant les parois principales (2, 3) et qui est laissé ouvert sur le quatrième côté (7) et dans lequel on peut insérer à travers le côté ouvert (7) une cassette parallélépipédique (9) contenant un support d'informations de manière à protéger la cassette et qui présente, à proximité d'au moins une paroi latérale (4) adjacente au côté ouvert (7), une pièce de serrage (11), limitée par des contours extérieurs, fixée au réceptacle (1) à proximité de cette paroi latérale (4), qui sert à maintenir par serrage la cassette (9) introduite dans le réceptacle (1) et qui présente une partie (14; 27) dépassant vers l'intérieur du réceptacle à proximité de la face intérieure de la paroi latérale (4), caractérisé en ce que la pièce de serrage (11) traverse la paroi latérale (4) de sa face intérieure vers sa face extérieure et que la pièce de serrage (11) est constituée d'un matériau élastique et peut en partie être déformée élastiquement par une cassette (9) lors de son introduction dans le réceptacle (1), à savoir la partie dépassant vers l'intérieur du réceptacle (14; 27), et que la pièce de serrage (11) comporte au moins un évidement (18; 29; 30, 31; 37) situé à l'intérieur de ses contours extérieurs, qui se trouve au moins en grande partie à proximité de la partie (14; 27) de la pièce de serrage (11) dépassant vers l'intérieur du réceptacle et dans lequel au moins une partie de la matière de la pièce de serrage (11) entourant l'évidement (18; 29; 30, 31; 37) peut s'enfoncer lors de l'introduction de la cassette (9) dans le réceptacle (1).

2. Réceptacle suivant la revendication 1, caractérisé en ce que la pièce de serrage (11) présente une symétrie de révolution vis-à-vis d'un axe de symétrie (12) perpendiculaire à la paroi latérale (4) traversée par la pièce de serrage (11) et que l'évidement (18) est constitué par un évidement s'élargissant vers l'intérieur du réceptacle et ouvert vers l'intérieur du réceptacle correspondant à la symétrie de révolution de la pièce de serrage (11).

3. Réceptacle suivant la revendication 2, caractérisé en ce que l'évidement (18) est de forme conique.

4. Réceptacle suivant la revendication 2 ou 3, caractérisé en ce que la partie (14) de la pièce de serrage (11) dépassant vers l'intérieur du réceptacle présente un contour extérieur (19) tronconique.

5. Réceptacle suivant la revendication 1, caractérisé en ce que la pièce de serrage (11) est essentiellement à symétrie spéculaire par rapport à un plan de symétrie (21) perpendiculaire à la paroi latérale (4) traversée par la pièce de serrage (11) et que l'évidement (29; 30, 31; 37) est disposé à symétrie spéculaire par rapport au plan de symétrie (21) de la pièce de serrage (11).

6. Réceptacle suivant la revendication 5, caractérisé en ce que l'évidement (29; 30, 31; 37) est constitué par un passage cylindrique, qui traverse la pièce de serrage (11) dans une direction parallèle à la paroi latérale (4) que celle-ci traverse et qui est ouvert à ses deux extrémités axiales, et à sa périphérie radiale, est entouré de tous côtés par le matériau de la pièce de serrage (11).
